# EUROPEAN PATENT SPECIFICATION

(11) **EP 4 066 624 B1**
(45) Date of publication and mention of the grant of the patent: **25.02.2026**
(21) Application number: 21166403.2
(22) Date of filing: 31.03.2021
(51) Int. Cl.: A01F 15/06, A01F 15/08, A01F 15/10

(54) **AGRICULTURAL VEHICLE WITH INDEPENDENTLY MOVABLE WINDGUARD ROLLERS**
LANDWIRTSCHAFTLICHES FAHRZEUG MIT UNABHÄNGIG BEWEGBAREN WINDSCHUTZROLLEN
VÉHICULE AGRICOLE COMPORTANT DES ROULEAUX COUPE-VENT MOBILES INDÉPENDAMMENT

(43) Date of publication of application: 05.10.2022
(73) Proprietor: CNH Industrial Belgium N.V., 8210 Zedelgem (BE)
(72) Inventor: Beelaert, Simon, 9991 Adegem (BE); Blancke, Jeffrey, 8720 Markegem (BE); Van Belleghem, Stijn, 9990 Maldegem (BE)
(74) Representative: CNH Industrial IP Department

(56) References cited:
- EP-A1- 1 306 003
- EP-A1- 2 168 427
- EP-A1- 2 745 672
- EP-A1- 2 777 379
- EP-A2- 3 666 061
- EP-B1- 2 168 427
- EP-B1- 2 745 672
- EP-B1- 2 777 379
- US-B1- 6 877 304

## Description

### BACKGROUND OF THE INVENTION

The present invention relates to agricultural vehicles and, more particularly, to pickup assemblies for agricultural vehicles that include windguards.

Certain agricultural machines, such as forage harvesters, balers and forage wagons, are required to collect crop material, that has been cut, from the field. The component of such agricultural machines which gathers the crop material and feeds it further into the machine for processing is generally known as a pickup assembly. A pickup assembly typically comprises a pickup drum rotatably mounted on a frame, with radially arranged projecting tines to collect the crop material and propel it upwards, past a guiding element and then into a feed channel through which the crop material is conveyed into the machine for subsequent processing, such as baling, threshing, chopping, storing and/or depositing. This guiding element is generally referred to as a windguard, and serves the purposes of restricting the movement of the collected crop material in the forward and upward direction, shielding the crop flow path from wind influence and guiding the crop material efficiently into the feed channel.

Known windguard designs may be as simple as a deflector, e.g. comprising a flat sheet metal plate or an arrangement of such plates. Alternatively, a windguard may comprise a roller extending transversely across the width of the pickup assembly located above and forward of the pickup drum. Such roller, which can for example be rotatably mounted at its opposite ends on two support arms, may guide the crop material more efficiently along a well-defined crop flow path compared to a simple deflector, e.g. with reduced resistance to crop flow. The support arms are typically pivotable relative to the frame of the pickup assembly so that the gap between the roller and the pickup drum may increase as the flow of crop material increases. Some known windguards utilize two rollers: a front roller that rolls over crop material to compress it slightly for smooth pickup by the tines and a rear roller that guides crop material toward the feed channel. The front and rear roller are adjustable for varying crop feed conditions, but known constructions do not adequately address adjustability needs for certain scenarios.

What is needed in the art is a pickup assembly that addresses some of the previously described issues of known pickup assemblies.

EP 1 306 003 A1 describes a ball press with reception device for the harvested crop having at least one pick-up drum at its front side relative to the crop feed direction, followed by at least one crop conveying drum rotating about an axis transverse to the travel direction, in turn followed by at least one cutting and/or feed device.

### SUMMARY OF THE INVENTION

The present invention provides a pickup assembly according to claim 1. Preferred embodiments are provided in the dependent claims.

A possible advantage that may be realized by exemplary embodiments provided according to the present disclosure is that a height of the first roller, which may be a front roller, can be adjusted to account for differing swath heights without adjusting the relative position or functionality of the second roller, especially when the second roller is at the position closest to the pickup drum, which is useful when there is little or no crop material being picked up by the tines.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
FIG. 1 is a side view of an exemplary embodiment of an agricultural vehicle, illustrated in the form of a forage harvester, provided according to the present disclosure;
FIG. 2 is a side view of a material conveyor and a pickup assembly of the agricultural vehicle illustrated in FIG. 1 when a first roller of a windguard assembly is in a first position and a second roller of the windguard assembly is at a position closest to a pickup drum, in accordance with the present disclosure;
FIG. 3 is a side view of the windguard assembly of the pickup assembly illustrated in FIGS. 1 and 2;
FIG. 4 is a side view of the material conveyor and the pickup assembly illustrated in FIGS. 1-3 when the first roller has moved to a second position without adjusting the position of the second roller; and
FIG. 5 is a side view of the windguard assembly of the pickup assembly illustrated in FIGS. 1-4 when the first roller is in the first position illustrated in FIGS. 2-3 and the second roller has moved to a position further from the pickup drum without adjusting the position of the first roller.

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

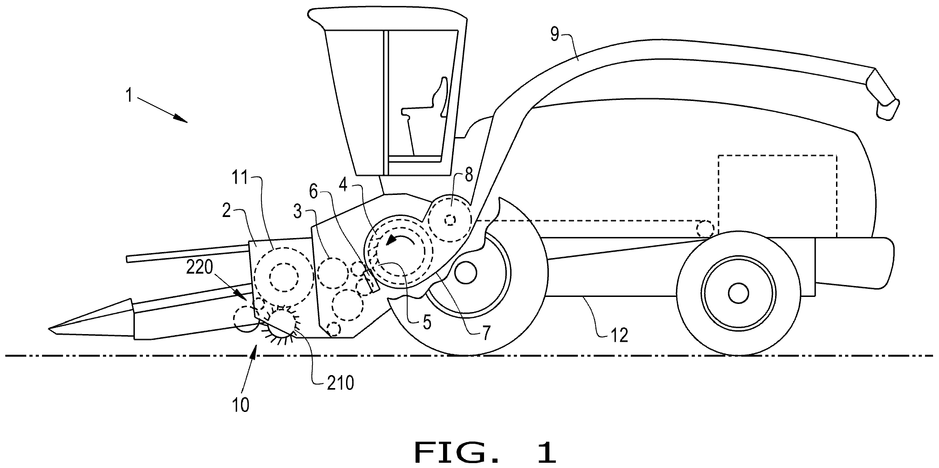

FIG. 1 shows a schematic side view of an exemplary embodiment of an agricultural vehicle, illustrated in the form of a forage harvester 1. As the harvester 1 advances through a field, crops are gathered by a header 2 and transported to a central area of the header 2 where the crops enter a set of feed rolls 3. The rolls 3 guide the crops in the form of a mat with a given thickness towards the cutting drum 4, which rotates in the direction indicated by the arrow, about a rotation axis that is transversal to the direction of movement of the crops. Knives 5 are mounted on the drum 4 (only four are shown, the knives 5 are distributed along the full circumference of the drum 4), so that the knives 5 pass by a stationary shear bar 6 as the drum 4 rotates, thereby chopping the crops into small pieces which are further transported between the cutting drum 4 and a concave 7. The chopped material is then ejected by a blower 8 through a spout 9. The harvester 1 includes a pickup assembly 10 that picks up crop material and moves it toward a crop material conveyor 11, illustrated in the form of an auger. The harvester 1 also includes a chassis 12, which carries the components of the harvester 1. It should be appreciated that while the agricultural vehicle 1 is illustrated and described as a forage harvester, in some embodiments the agricultural vehicle is in the form of other agricultural vehicles such as a baler, *e.g.,* a large square baler, a small square baler, or a round baler, or a forage wagon.

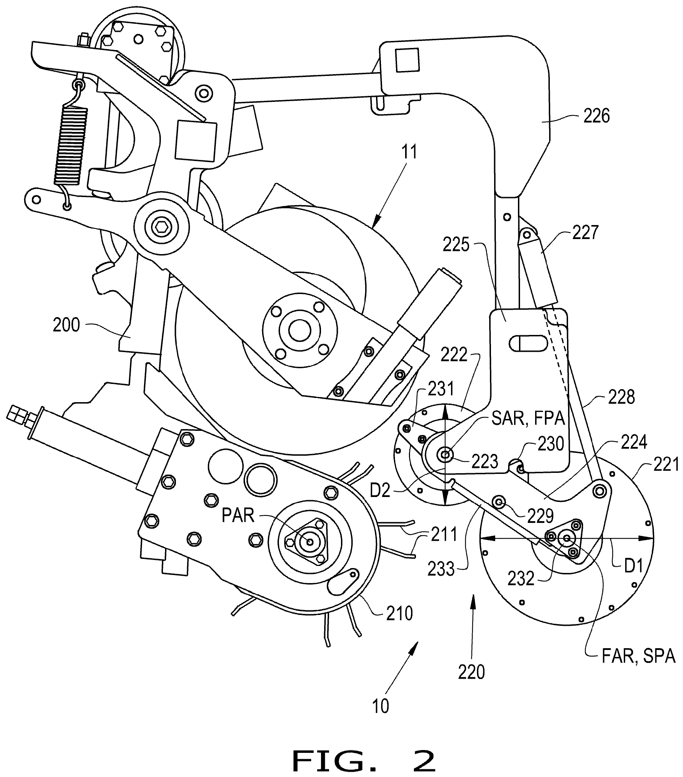

Referring now to FIGS. 2-3, the pickup assembly 10 and material conveyor 11 are illustrated in further detail. The pickup assembly 10 includes a pickup drum 210 that rotatably carries a plurality of tines 211 about a pickup axis of rotation PAR. The pickup drum 210 is carried by a frame 200, which may be a part of the chassis 12 or carried by the chassis 12. The tines 211 pickup crop material from the ground during rotation and move the picked up crop material toward the crop material conveyor 11, which may be an auger, a belt or chain conveyor, or other type of conveyor suitable for conveying crop material. The crop material conveyor 11 can convey the picked up crop material toward an interior of the harvester 1, or to a central location where a separate conveyor conveys the crop material toward the interior of the harvester 1. It should be appreciated that many different suitable constructions of pickup drums and crop material conveyors are known, so further description is omitted for brevity.

The pickup assembly 10 also includes a windguard assembly 220. The windguard assembly 220 includes a first roller 221, which may be a front roller, and a second roller 222, which may be a rear roller, *i.e.,* the first roller 221 may be carried in front of the second roller 222. Each of the rollers 221, 222 is carried in front of the pickup drum 210. The first roller 221 rotates about a first axis of rotation FAR and the second roller 222 rotates about a second axis of rotation SAR. The first roller 221 is used to compress crop material as the vehicle 1 travels forward. The first roller 221 compressing the crop material makes it easier for the tines 211 to pickup the crop material during rotation of the pickup drum 210. As the tines 211 rotate and move the picked up crop material toward the crop material conveyor 11, the second roller 222 can help guide the crop material toward the crop material conveyor 11.

As shown in FIGS. 2 till 5, the diameter D1 of the first roller 221 is preferably greater than the diameter D2 of the second roller 222, but in an alternative embodiment the diameter D1 of the first roller 221 can also be equal or smaller than the diameter D2 of the second roller 222.

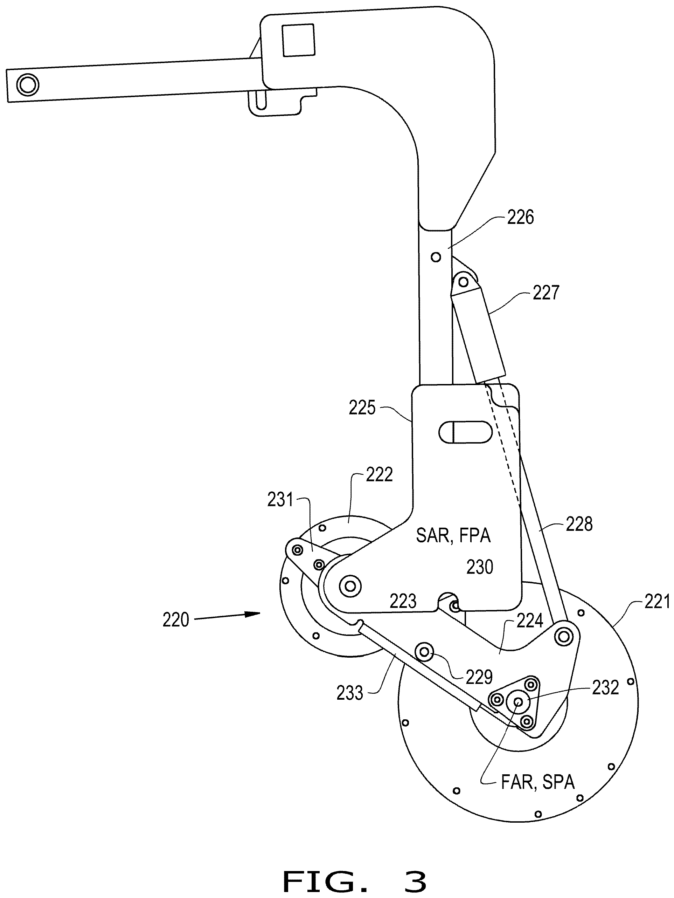

Each of the rollers 221, 222 is pivotable relative to the frame 200 to adjust a respective position of each roller 221, 222 relative to the pickup drum 210. The first roller 221 is illustrated in a first position in FIGS. 2 and 3, which may be a relatively low height position, and the second roller 222 is illustrated at a position closest to the pickup drum 210 in FIGS. 2 and 3. As used herein, the second roller 222 is at a position "closest to" the pickup drum 210 when a separation distance between the second roller 222 and the pickup drum 210 is at a minimum and pivoting of the first roller 221 will not move the second roller 222 more toward the pickup drum 210. The second roller 222 may be at the position closest to the pickup drum 210 when, for example, little or no crop material is being picked up by the tines 211 that would tend to force the second roller 222 away from the pickup drum 210 as the tines 211 move the picked up crop material toward the crop material conveyor 11.

In known windguard assemblies, the first and second rollers may be linked together such that pivoting movement of one of the rollers always causes a corresponding pivoting movement of the other roller. While this type of linkage is useful during, for example, forward movement and gathering of crop material from the ground, consistent linked pivoting of the rollers may be undesirable in certain situations. For example, an operator may wish to pivot the front roller and adjust a height of the front roller prior to the start of crop material gathering in order to adjust the compressive force applied to swaths of crop material in front of the vehicle. In windguard assemblies that have a consistent linked pivoting of the rollers, it is impossible to adjust one of the rollers without adjusting the other roller, which may lead to one of the rollers being in a desired position while the other roller is out of the desired position. Some solutions to address this problem have involved independently controlling pivoting of the rollers with separate mechanical actuators, such as hydraulic cylinders, but such solutions are relatively complex, as well as expensive, and tend to take up a large amount of space in areas where there is little free space.

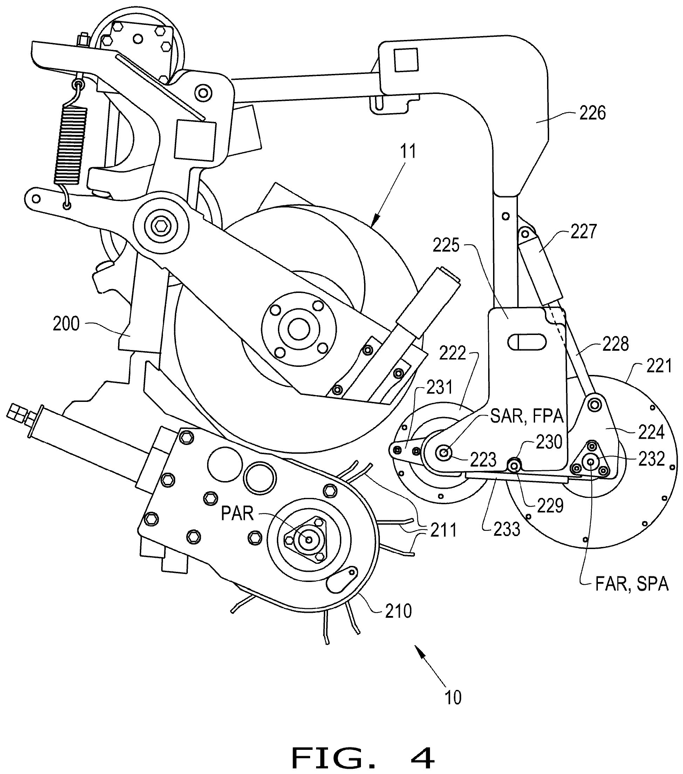

To address some of these issues, and with further reference to FIGS. 2 and 3 as well as FIG. 4, the first roller 221 is pivotable about a first pivot 223 defining a first pivot axis FPA that is coaxial with the second axis of rotation SAR of the second roller 222 when the second roller 222 is at the position closest to the pickup drum 210 such that the relative position of the first roller 221 (to the pickup drum 210) is adjustable without adjusting the relative position of the second roller 222 when the second roller 222 is at the position closest to the pickup drum 210. In this respect, the height of the first roller 221 relative to the ground may be adjusted without adjusting the position of the second roller 222, allowing the second roller 222 to stay in the desired position for when little or no crop material is being moved by the tines 211 toward the crop material conveyor 11. As can be seen in comparing FIGS. 2 and 4, for example, the first roller 221 can be pivoted from a first position (illustrated in FIG. 2), where the first roller 221 is relatively close to the ground, to a second position (illustrated in FIG. 4), where the first roller 221 is further from the ground than in the first position. Such adjustment may be desired to accommodate taller swaths of crop material that the vehicle 1 is approaching to reduce the risk of overly compressing the crop material prior to pickup by the tines 211.

A first arm 224 may be coupled to the first roller 221 and pivotable about the first pivot 223. In this respect, the first arm 224 is a pivot arm of the first roller 221 and allows pivotable movement of the first roller 221 about the first pivot axis FPA. The first arm 224 may be pivotably mounted to, for example, a support 225 by the first pivot 223. The support 225 may be coupled to the frame 200 by, preferably, a leg 226 or similar construction. The support 225 and the leg 226 can be coupled by using various joining techniques like clamping, bolting, welding, etc. The support 225 and the leg 226 could also be realized as one component. In this respect, the first pivot 223 may be fixed relative to the pickup drum 210 so the first pivot 223 does not generally change position relative to the pickup drum 210. It should be appreciated that while the first roller 221 is illustrated and described as being pivotable by the first arm 224, the first roller 221 may be pivotable about the first pivot axis FPA in other ways, such as by sliding through an arcuate slot and/or moving along an arcuate track. Thus, the first arm 224 represents merely one exemplary way of pivoting the first roller 221 about the first pivot axis FPA.

To controllably pivot the first arm 224, and thus the first roller 221, an actuator 227, such as a hydraulic or pneumatic cylinder, an electrical or other type of actuator, may be coupled to the first arm 224 by a linkage rod 228. The actuator 227 may extend or retract an actuator rod to cause pivoting of the first arm 224 and the first roller 221, via a linkage rod 228 as shown in FIG. 2 or via a direct connection between the actuator and the first arm 224 (not shown). The actuator 227 may be controlled by, for example, a controller of the vehicle 1 to allow an operator to selectively pivot the first arm 224 and the first roller 221 to a desired position. In some embodiments, the first arm 224 includes a stop 229 that is pivotably aligned with a notch 230 formed in the support 225 so the stop 229 prevents further pivoting of the first arm 224 and the first roller 221 when the stop 229 pivots into the notch 230, as illustrated in FIG. 4. The stop 229 may pivot into the notch 230 when the first roller 221 reaches a maximum height position, corresponding to a maximum height of the first roller 221 relative to the ground. The notch 229 can be semi-circular as shown in FIG. 2, or have another shape as abutment surface for the stop 229.

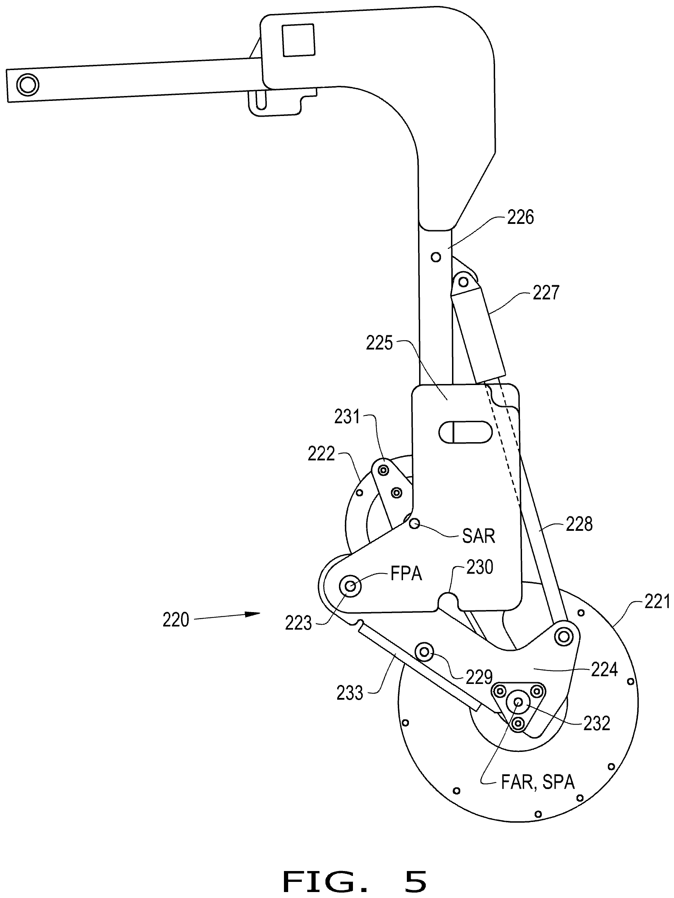

To pivot the second roller 222, and referring now to FIG. 5 as well, the windguard assembly 220 may include a second arm 231 that is coupled to the second roller 222 and is pivotable about a second pivot 232 defining a second pivot axis SPA. Unlike the first arm 224, which may be fixed relative to the pickup drum 210, the second pivot 232 may be carried by the first arm 224 so the position of the second pivot 232 relative to the pickup drum 210 is dynamic, as can be appreciated from comparing the positions of the second arm 231 and the second pivot 232 in FIGS. 2, 4, and 5. In some embodiments, the second pivot 232 is positioned such that the second pivot axis SPA is coaxial with the first axis of rotation FAR of the first roller 221 regardless of the position of the first roller 221, *e.g.,* due to being mounted on the first arm 224 in line with the first axis of rotation FAR of the first roller 221, which may be defined by an axle or similar construction. As can be appreciated from FIG. 5, pivoting the second roller 222 in this manner allows the second roller 222 to pivot relative to the pickup drum 210 due to picked up crop material pressing against the second roller 222 without relying on pivoting of the first roller 221. It should be appreciated that while the second roller 222 is illustrated and described as being pivotable by the second arm 231, the second roller 222 may be pivotable about the second pivot axis SPA in other ways, such as by sliding through an arcuate slot and/or moving along an arcuate track. Thus, the second arm 231 represents merely one exemplary way of pivoting the second roller 222 about the second pivot axis SPA.

To keep the second arm 231 from pivoting below the first arm 224, the first arm 224 may include an abutment 233 that projects from the first arm 224. The second arm 231 can rest on the abutment 233 when the second roller 222 is at the position closest to the pickup drum 210, which prevents the second arm 231 from uncontrollably pivoting. In some embodiments, the actuator 227 may be configured to maintain the extension of the actuator rod at a set position in order to maintain the relative position of the first roller 221 to the pickup drum 210 during operation so pivoting of the second roller 222 does not affect the position of the first roller 221, *i.e.,* the actuator 227 also acts as a brake to pivoting of the first roller 221.

From the foregoing, it should be appreciated that the windguard assembly 220 described herein has rollers that can be moved independently from each other without utilizing separate actuators. The first roller 221 can be adjusted, for example, prior to the beginning of crop gathering without moving the second roller 222 from the closest position to the pickup drum 210, which is a useful position when there is initially little or no crop material being picked up by the tines 211. After setting the first roller 221 to the desired position, such as a height relative to the ground, and gathering begins, the second roller 222 is free to responsively pivot to crop material being moved by the tines 211 toward the crop material conveyor 11. The second roller 222 may also be pivotable about the first axis of rotation FAR of the first roller 221, allowing lumps in the gathered swath crop material to pass through. By increasing or decreasing the weight of the second arm 231 and/or the second roller 222, and/or by applying downward or upward pressure onto the second roller 222, e.g. by a spring between the second arm 231 and the first arm 224, the pressure to allow lumps to pass can be adjusted, e.g. to deal with different type of crop and/or field conditions.

While this invention has been described with respect to at least one embodiment, the present invention can be further modified within the scope of the claims. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A pickup assembly (10) for an agricultural vehicle (1), in particular a forage harvester, a baler or a forage wagon, the pickup assembly (10) comprising:
a frame (200);
a pickup drum (210) carried by the frame (200) and carrying a plurality of tines (211); and
a windguard assembly (220) carried by the frame (200) and comprising a first roller (221) and a second roller (222) carried in front of the pickup drum (210), the first roller (221) and the second roller (222) each being pivotable relative to the frame (200) to adjust a respective relative position to the pickup drum (210);
**characterized in that:**
the first roller (221) is pivotable about a first pivot (223) defining a first pivot axis (FPA) that is coaxial with an axis of rotation (SAR) of the second roller (222) when the second roller (222) is at a position closest to the pickup drum (210) such that the relative position of the first roller (221) is adjustable without adjusting the relative position of the second roller (222) when the second roller (222) is at the position closest to the pickup drum (210), wherein the first roller (221) is carried by a first arm (224) that is pivotable about the first pivot (223) .

2. The pickup assembly (10) of claim 1, wherein the first pivot (223) is fixed relative to the pickup drum (210).

3. The pickup assembly (10) of claim 1 or 2, wherein the second roller (222) is carried by a second arm (231) that is pivotable about a second pivot (232) defining a second pivot axis (SPA).

4. The pickup assembly (10) of claim 3, wherein the second pivot (232) is carried by the first arm (224).

5. The pickup assembly (10) of any one of claims 2 to 4, wherein the second pivot axis (SPA) is coaxial with an axis of rotation (FAR) of the first roller (221) regardless of the position of the first roller (221).

6. The pickup assembly (10) of any one of claims 3 to 5, wherein the first arm (224) comprises an abutment (233) that the second arm (231) rests on when the second roller (222) is at the position closest to the pickup drum (210).

7. The pickup assembly (10) of any one of claims 1 to 6, wherein the first pivot (223) is mounted to a support (225) that is connected to the frame (200), preferably by a leg (226).

8. The pickup assembly (10) of claim 7, wherein the support (225) has a notch (230) formed therein and the first arm (224) comprises a stop (229) that is pivotably aligned with the notch (230) and configured to stop further pivoting of the first roller (221) when the first roller (221) reaches a maximum height position.

9. The pickup assembly (10) of claims 1 to 8, further comprising an actuator (227) coupled to the first arm (224) and configured to adjust the relative position of the first roller (221) by pivoting the first arm (224).

10. The pickup assembly (10) of claims 1 to 9, further comprising a spring coupled at one side to the first arm (224) and at the other side to the second arm (231) and configured to apply a downward or upward pressure to the second roller (222).

11. The pickup assembly (10) of any of the preceding claims, wherein the first roller (221) is a front roller and the second roller (222) is a rear roller.

12. An agricultural vehicle (1), comprising a chassis (12), a crop material conveyor (11) carried by the chassis (12), and the pickup assembly (10) of any of the preceding claims carried by the chassis (12) and configured to move crop material from the ground toward the crop material conveyor (11).

13. The agricultural vehicle (1) of claim 12, wherein the crop material conveyor (11) is an auger.

14. The agricultural vehicle (1) of claim 12 or 13, wherein the agricultural vehicle (1) is a forage harvester, a large square baler, a small square baler, or a round baler.

## Patentansprüche

1. Pick-Up-Anordnung (10) für ein landwirtschaftliches Fahrzeug (1), insbesondere einen Feldhäcksler, eine Ballenpresse oder einen Ladewagen, wobei die Pick-Up-Anordnung (10) umfasst:
einen Rahmen (200);
eine Pick-Up-Trommel (210), die von dem Rahmen (200) getragen wird und eine Mehrzahl von Zinken (211) trägt; und
eine Windschutzanordnung (220), die von dem Rahmen (200) getragen wird und eine erste Walze (221) und eine zweite Walze (222) umfasst, die vor der Pick-Up-Trommel (210) gelagert sind, wobei die erste Walze (221) und die zweite Walze (222) jeweils relativ zu dem Rahmen (200) schwenkbar sind, um eine jeweilige Position relativ zur Pick-Up-Trommel (210) einzustellen;
**dadurch gekennzeichnet, dass**
die erste Walze (221) um ein erstes Drehgelenk (223) schwenkbar ist, das eine erste Schwenkachse (FPA) definiert, die koaxial zu einer Rotationsachse (SAR) der zweiten Walze (222) ist, wenn sich die zweite Walze (222) in einer der Pick-Up-Trommel (210) nächstgelegenen Position befindet, sodass die Relativposition der ersten Walze (221) einstellbar ist, ohne die Relativposition der zweiten Walze (222) einzustellen, wenn sich die zweite Walze (222) in der der Pick-Up-Trommel (210) nächstgelegenen Position befindet, wobei die erste Walze (221) von einem ersten Arm (224) getragen wird, der um das erste Drehgelenk (223) schwenkbar ist.

2. Pick-Up-Anordnung (10) nach Anspruch 1, wobei das erste Drehgelenk (223) relativ zur Pick-Up-Trommel (210) festgelegt ist.

3. Pick-Up-Anordnung (10) nach Anspruch 1 oder 2, wobei die zweite Walze (222) von einem zweiten Arm (231) getragen wird, der um ein zweites Drehgelenk (232) schwenkbar ist, das eine zweite Schwenkachse (SPA) definiert.

4. Pick-Up-Anordnung (10) nach Anspruch 3, wobei das zweite Drehgelenk (232) von dem ersten Arm (224) getragen wird.

5. Pick-Up-Anordnung (10) nach einem der Ansprüche 2 bis 4, wobei die zweite Schwenkachse (SPA) unabhängig von der Position der ersten Walze (221) koaxial zu einer Rotationsachse (FAR) der ersten Walze (221) ist.

6. Pick-Up-Anordnung (10) nach einem der Ansprüche 3 bis 5, wobei der erste Arm (224) einen Anschlag (233) umfasst, an dem der zweite Arm (231) anliegt, wenn sich die zweite Walze (222) in der der Pick-Up-Trommel (210) nächstgelegenen Position befindet.

7. Pick-Up-Anordnung (10) nach einem der Ansprüche 1 bis 6, wobei das erste Drehgelenk (223) an einer Stütze (225) angebracht ist, die mit dem Rahmen (200) verbunden ist, vorzugsweise über einen Schenkel (226).

8. Pick-Up-Anordnung (10) nach Anspruch 7, wobei die Stütze (225) eine darin ausgebildete Ausnehmung (230) aufweist und der erste Arm (224) einen Anschlag (229) umfasst, der schwenkbar mit der Ausnehmung (230) ausgerichtet ist und dazu eingerichtet ist, ein weiteres Schwenken der ersten Walze (221) zu stoppen, wenn die erste Walze (221) eine maximale Höhenposition erreicht.

9. Pick-Up-Anordnung (10) nach einem der Ansprüche 1 bis 8, weiterhin umfassend einen Aktuator (227), der mit dem ersten Arm (224) gekoppelt ist und dazu eingerichtet ist, die Relativposition der ersten Walze (221) durch Schwenken des ersten Arms (224) einzustellen.

10. Pick-Up-Anordnung (10) nach einem der Ansprüche 1 bis 9, weiterhin umfassend eine Feder, die auf einer Seite mit dem ersten Arm (224) und auf der anderen Seite mit dem zweiten Arm (231) gekoppelt ist und dazu eingerichtet ist, einen nach unten oder nach oben gerichteten Druck auf die zweite Walze (222) auszuüben.

11. Pick-Up-Anordnung (10) nach einem der vorangehenden Ansprüche, wobei die erste Walze (221) eine vordere Walze ist und die zweite Walze (222) eine hintere Walze ist.

12. Landwirtschaftliches Fahrzeug (1), umfassend ein Fahrgestell (12), einen vom Fahrgestell (12) getragene Erntegut-Fördereinrichtung (11), sowie die Pick-Up-Anordnung (10) nach einem der vorangehenden Ansprüche, die von dem Fahrgestell (12) getragen wird und dazu eingerichtet ist, Erntegut vom Boden in Richtung der Erntegut-Fördereinrichtung (11) zu bewegen.

13. Landwirtschaftliches Fahrzeug (1) nach Anspruch 12, wobei die Erntegut-Fördereinrichtung (11) eine Förderschnecke ist.

14. Landwirtschaftliches Fahrzeug (1) nach Anspruch 12 oder 13, wobei das landwirtschaftliche Fahrzeug (1) ein Feldhäcksler, eine Großballenpresse, eine Kleinballenpresse oder eine Rundballenpresse ist.

## Revendications

1. Un assemblage de ramassage (10) pour un véhicule agricole (1), et en particulier une ensileuse, une presse à balles ou une remorque d'ensilage, l'assemblage de ramassage (10) comprenant :
un châssis (200) ;
un tambour de ramassage (210) supporté par le châssis (200) et
portant plusieurs dents (211) ; et
un assemblage pare-vent (220) supporté par le châssis (200) et comprenant un premier rouleau (221) ainsi qu'un second rouleau (222) supportés devant le tambour de ramassage (210), le premier rouleau (221) et le second rouleau (222) pouvant chacun pivoter par rapport au châssis (200) pour adapter une position relative respective par rapport au tambour de ramassage (210) ;
**caractérisé en ce que :**
le premier rouleau (221) est pivotable autour d'un premier pivot (223) définissant un premier axe de pivotement (FPA) coaxial à un axe de rotation (SAR) du second rouleau (222) lorsque le second rouleau (222) se trouve dans une position la plus proche du tambour de ramassage (210), de sorte que la position relative du premier rouleau (221) est réglable sans ajustement de la position relative du second rouleau (222) quand le second rouleau (222) se trouve dans la position la plus proche du tambour de ramassage (210), où le premier rouleau (221) est porté par un premier bras (224) pivotable autour du premier pivot (223).

2. L'assemblage de ramassage (10) visé à la revendication 1, dans lequel le premier pivot (223) est fixe par rapport au tambour de ramassage (210).

3. L'assemblage de ramassage (10) visé à la revendication 1 ou 2, dans lequel le second rouleau (222) est porté par un second bras (231) pivotable autour d'un second pivot (232) définissant un second axe de pivotement (SPA).

4. L'assemblage de ramassage (10) visé à la revendication 3, dans lequel le second pivot (232) est porté par le premier bras (224).

5. L'assemblage de ramassage (10) d'une quelconque revendication parmi les revendications 2 à 4, dans lequel le second axe de pivotement (SPA) est coaxial à un axe de rotation (FAR) du premier rouleau (221) indépendamment de la position du premier rouleau (221).

6. L'assemblage de ramassage (10) d'une quelconque revendication parmi les revendications 3 à 5, dans lequel le premier bras (224) comprend une butée (233) sur laquelle repose le second bras (231) lorsque le second rouleau (222) se trouve dans la position la plus proche du tambour de ramassage (210).

7. L'assemblage de ramassage (10) d'une quelconque revendication parmi les revendications 1 à 6, dans lequel le premier pivot (223) est monté sur un support (225) relié au châssis (200), de préférence par une jambe (226).

8. L'assemblage de ramassage (10) de la revendication 7, dans lequel le support (225) comporte une encoche (230) formée dans celui-ci et le premier bras (224) comporte une butée (229) alignée de manière pivotante avec l'encoche (230) et configurée pour empêcher le premier rouleau (221) de continuer à pivoter lorsque le premier rouleau (221) atteint une position de hauteur maximale.

9. L'assemblage de ramassage (10) des revendications 1 à 8, comprenant également un actionneur (227) couplé au premier bras (224) et configuré pour adapter la position relative du premier rouleau (221) en faisant pivoter le premier bras (224).

10. L'assemblage de ramassage (10) des revendications 1 à 9, comprenant également un ressort couplé, d'un côté, au premier bras (224) et, de l'autre côté, au second bras (231) et configuré pour exercer une pression vers le bas ou vers le haut sur le second rouleau (222).

11. L'assemblage de ramassage (10) d'une quelconque revendication parmi celles qui précèdent, dans lequel le premier rouleau (221) est un rouleau avant et le second rouleau (222) est un rouleau arrière.

12. Un véhicule agricole (1), comprenant un châssis (12), un convoyeur de produit de récolte (11) supporté par le châssis (12), et l'assemblage de ramassage (10) d'une quelconque revendication parmi celles qui précèdent supporté par le châssis (12) et configuré pour déplacer le produit de récolte du sol vers le convoyeur de produit de récolte (11).

13. Le véhicule agricole (1) de la revendication 12, dans lequel le convoyeur de produit de récolte (11) est une tarière.

14. Le véhicule agricole (1) de la revendication 12 ou 13, dans lequel le véhicule agricole (1) est une ensileuse, une grande presse à balles carrées, une petite presse à balles carrées ou une presse à balles rondes.
